# EUROPÄISCHE PATENTANMELDUNG

(11) **EP 1 929 871 A2**
(43) Veröffentlichungstag der Anmeldung: **11.06.2008**
(21) Anmeldenummer: 07033511.2
(22) Anmeldetag: 25.09.2007
(51) Int. Cl.: A21C 15/04

(54) **Verfahren zum Zuschneiden von gebackenen Waffeln**

(30) Priorität: 05.12.2006 DE 102006057615
(71) Anmelder: Walterwerk Kiel GmbH & Co. KG, 24106 Kiel (DE)
(72) Erfinder: Kempass, Dieter, 24109 Kiel (DE)
(74) Vertreter: Biehl, Christian

(57) **Zusammenfassung**

Verfahren zum Zuschneiden von gebackenen Waffeln mit den Schritten :
- Fassen einer Waffel mit Patrizenbacken (24, 26),
- Bewegen der Patrizenbacken (24, 26) und der zwischen ihnen gehaltenen Waffel durch eine Matrizenöffnung, und
- Öffnen der Patrizenbacken (24; 26) zur Freigabe der zugeschnittenen Waffel.

## Beschreibung

Die Erfindung betrifft ein Verfahren zum Zuschneiden von gebackenen Waffeln.

Waffeln werden üblicherweise nicht in geschlossenen Formen mit definierten Abmessungen hergestellt, da sie in diesen nicht genügend entlüften können. Vielmehr wird der Teig in seitlich offene Waffeleisen gegeben und dort durch eher kurzfristigen Kontakt mit den heißen Waffelformen in eine waffelartige Form mit jedoch ungleichen Randabmessungen gebracht.

Die so erstellten Waffeln werden sich beim Abkühlen verfestigen, sind jedoch zunächst noch recht weich, Es besteht aber das Bedürfnis, solche Waffeln, beispielsweise für neuartige komplexere Speiseeisdarbietungen, zuzuschneiden. Wenn man wartet, bis die Waffeln starr und fest werden, werden sie beim Schneiden bröckeln.

Bisher werden die unfertigen Waffeln zum Zuschneiden auf eine flache Fläche aufgebracht und nach Art einer Plätzchenform wird ein den Abmessungen entsprechendes Werkzeug von oben auf die Fläche gedrückt, wonach der Verschnitt entfernt wird und in der Form die geschnittene Waffel verbleibt. Ein solches Verfahren ist z. B. der EP 1 639 895 A2 zu entnehmen. Bei dem dort dargestellten Automaten werden eine Vielzahl von Waffeln über eine Vakuumsaugplatte nach dem mit Schneid/Stanzbuchsen vermittelten Schneiden abtransportiert.

Problematisch hierbei ist, dass ein gleichmäßiger Abtrennvorgang erheblichen Auf pressdruck der Schneidbuchsen auf eine Fläche benötigt, und dadurch die Schneidkanten der Form sehr schnell stumpf werden und ungleichmäßig abnutzen. Dies ist unvorteilhaft, da dann nach kurzer Zeit keine vollständige Abtrennung der Waffel von dem überstehenden Randverschnitt mehr gewährleistet ist.

Der Erfindung liegt nun die Aufgabe zugrunde, ein Verfahren und eine Vorrichtung zu entwickeln, das diese Probleme nicht aufweist, und bei dem vorteilhafterweise eine Verstärkung der geschnittenen Randbereiche durch Komprimierung des lockeren Waffelmaterials stattfindet.

Erfindungsgemäß wird dies durch ein Verfahren und eine Vorrichtung zur Durchführung des Verfahrens nach den vorliegenden unabhängigen Ansprüchen gelöst. Die Unteransprüche geben vorteilhafte Ausführungsformen wieder.

Insbesondere ist vorteilhaft, dass die Waffel mit zwei oder mehr Patrizenbacken vor dem Zuschneiden gegriffen wird, und die Waffel bei entsprechend dem Zuschnitt geformten Patrizenbacken durch eine Matrizenöffnung hindurchbewegt wird, wodurch die überstehenden Randbereiche abgetrennt werden und nicht zwischen die Patrizenbacken gelangen können.

Die fertige geschnittene Waffel, deren Randkanten beim Hindurchführen durch die Matrize geschlossen und verfestigt werden, kann dann nach Öffnen der Patrizenbakken entnommen werden und weiter bearbeitet werden. Dabei kann die Weiterbearbeitung ein Biegen oder die einfache Verpackung zu größeren Stückzahlen in einer Verpackungseinheit sein.

Vorteilhafterweise sind die beiden Patrizenbacken an einem gemeinsamen Drehpunkt gelagert und können unabhängig voneinander aber auch gemeinsam miteinander bewegt werden.

Weiter hat es sich als vorteilhaft herausgestellt, dass die Matrizenöffnung in einem Blechzuschnitt angeordnet ist, der um eine in der Ebene des Zuschnittes liegende Knickkante stumpfwinklig in einem Winkel zwischen 5° und 20° gebogen ist. Die Knickkante wird dabei derart gelegt, dass die beim Schneidevorgang in der auf die Patrizenbacken hin voranliegende Knickkante ungefähr mittig mit dem Hindurchführen der Patrizenbacken begonnen wird und an zwei gegenüberliegenden Rändern das Hindurchführen der Patrizenbacken endet.

Dadurch ergibt sich ein fortlaufender Abschehrprozeß, der die Kraft die aufgewendet werden muss verringert und gleichzeitig die Qualität des Schneidens verbessert.

Weitere Merkmale und Vorteile der Erfindung ergeben sich aus nachfolgender Beschreibung eines bevorzugten Ausführungsbeispiels. Dabei zeigt:
- Fig. 1: eine perspektivische Darstellung einer gesamten Schneidevorrichtung mit einer beispielsweise 20-fach vorgesehen Patrizenbacken/ Matrizenanordnung,
- Fig. 2: eine dieser 20 Anordnungen mit geöffneten Patrizenbacken in perspektivischer Ansicht,
- Fig. 3: eine der Fig. 2 entsprechende Darstellung mit geöffneten Patrizenbacken bei im Schnitt dargestellten Matrizenbacken,
- Fig. 4: eine Darstellung wie Fig. 3 mit geschlossenen Patrizenbacken vor Durchqueren der Matrizenfläche,
- Fig. 5: eine Darstellung wie Fig. 3 mit geschlossenen Patrizenbacken nach Durchqueren der Matrizenfläche, und
- Fig. 6: eine geöffnete Darstellung zum Freigeben der geschnittenen Waffel, die von der unteren Patrizenbacke herab abgegeben wird.

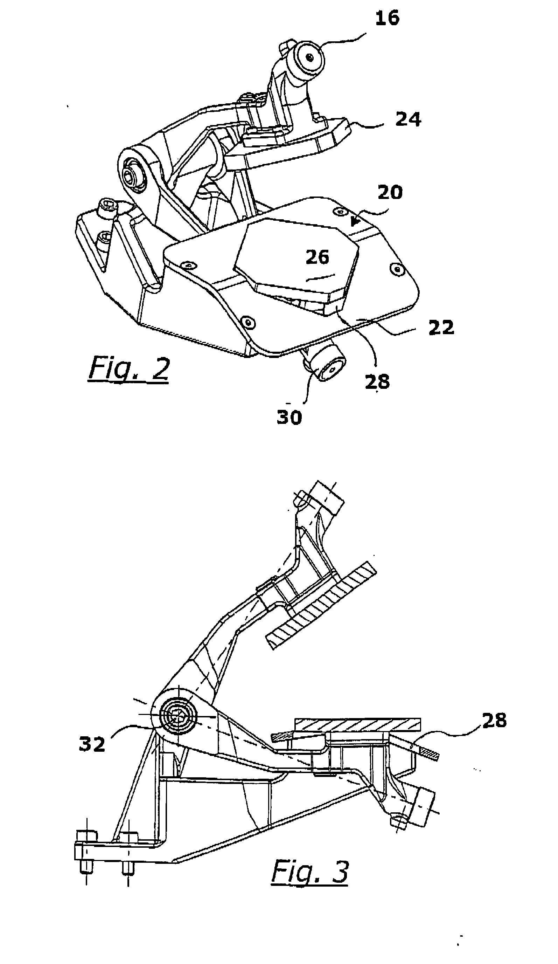

Die in den Figuren dargestellten Patrizenbacken sind dabei (wie in Fig. 2 gut zu erkennen -) an einer gemeinsamen Welle 32 gelagert, so daß sie nach außen, in der Zeichnung nach rechts vorn zangenartig öffnen.

In der Fig, 1 ist die erfindungsgemäße Vorrichtung in perspektivischer Gesamtdarstellung zu erkennen. Eine Vielzahl von z. B. zwanzig Patrizenbackenpaaren sind mit entsprechenden Matrizen auf einer Karussellanordnung vorgesehen, die in der Zeichnung im linken vorderen Bereich Waffeln über einen Zuführbogen 10 zugeführt erhält.

Nach einem Fassen einer Waffel mit den Patrizenbacken wird das Karussell entweder schrittweise oder - bevorzugt - kontinuierlich während des Fassens um eine Position weitergedreht, so dass ein leeres Backenpaar eine neue Waffel fasst und zur Abkühlung zwischen den Backen hält. Nachfolgend wird eine knapp hälftige Umdrehung des Karussells dazu genutzt, den Waffeln Zeit zu geben, abzukühlen. Im hinteren Bereich ist dann nach einer halben Umdrehung ein Bereich zu erkennen, bei dem die obere Patrizenbacke mit einem ersten oberen Schienenelement in Verbindung tritt, das die obere Patrizenbacke und damit auch die untere Patrizenbacke nach unten durch die Matrize schiebt. Im rechten vorderen Bereich der Zeichnung der Zeichnung ist dann eine Ausgabeschütte 14 für fertig zugeschnittene Waffeln zu erkennen.

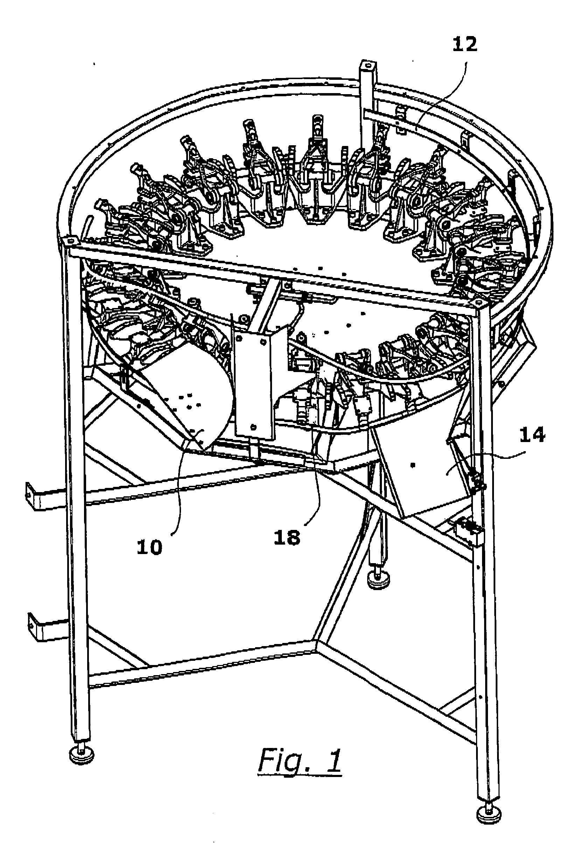

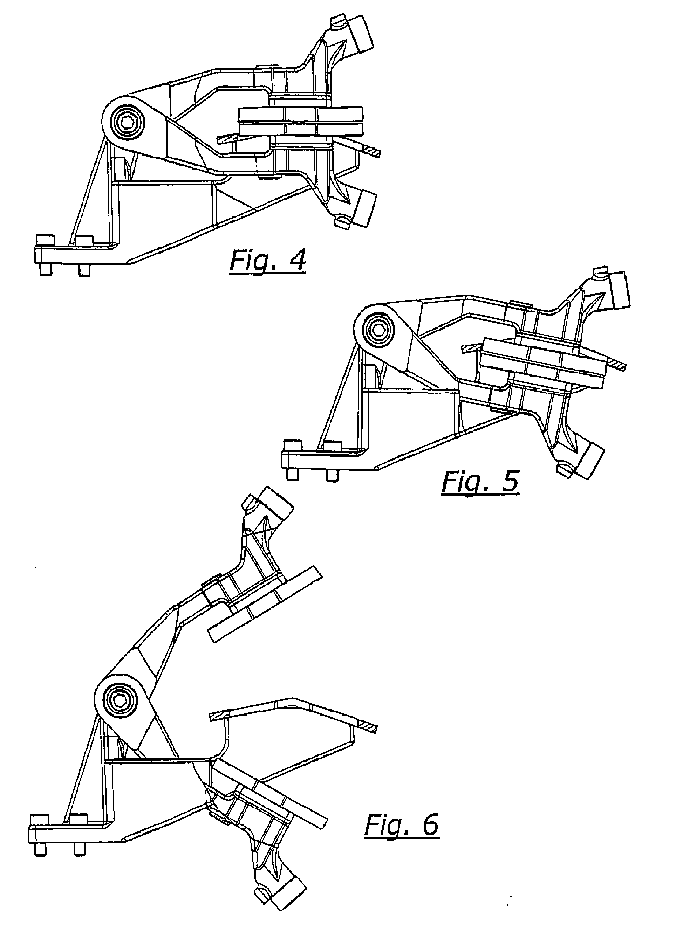

In der Fig. 2 sind an den Patrizenbacken Laufrollen 16 dargestellt, die mit einer oberen Schiene 12, wie in der Fig. 1 im hinteren Bereich, und einer unteren Schiene 18 im vorderen Bereich in Verbindung treten, um die Patrizenbacken entsprechend zu bewegen. Die unteren Patrizenbacken weisen ebenfalls Laufrollen auf, die auf entsprechend weiteren Schienen laufen. Die in der Fig. 2 gut erkennbare Matrizenplatte 20 ist mit einem stumpfwinkligen Knick versehen, so dass ein vorderer Bereich 22 nach unten hin abgebogen ist. Dies trägt, wie zwischen Fig. 3 und 5 zu erkennen, dazu bei, dass die Waffel, wenn sie zwischen den Patrizenbacken gehalten wird, zunächst in einem mittleren Bereich (Fig. 4) die Matrize passiert, bis sie anschließend (Fig. 5) am Rand ebenfalls geschnitten wird.

Bevor jedoch eine Waffel geschnitten wird, wird das in der Fig. 2 in der geöffneten Stellung perspektivisch angeordnete Patrizenpaar geschlossen, wie dies in der Fig. 4 in seitlicher Darstellung mit im Schnitt dargestellter Matrizenplatte dargestellt ist. Eine in einer möglichen Variante vorgesehene Begrenzung des Schließwinkels kann dabei bewirken, daß ein vorgegebener Freiraum (etwas kleiner als die Dicke der Waffel) zwischen den parallelen Backen verbleibt.

Eine der Fig. 2 entsprechende Darstellung im Schnitt ist durch die Fig. 3 verkörpert, in der anders als in Fig. 4 die Patrizenplatten im Schnitt und nicht in Seitendarstellung zu erkennen sind. Deutlich ist zu erkennen, dass die Matrizenplatte eine allseitig geschlossene mittige Ausnehmung aufweist, durch die zunächst die untere Patrizenplatte vor der Aufnahme der Waffel und während des Schneidens die obere hindurchgelangen. Da obere und untere Patrizenplatten mit gleichen Dimensionen entsprechend den Dimensionen der Ausnehmung versehen sind, wird ein zwischen den Patrizenbacken gehaltenes Waffelstück auf die Form der Matrizenöffnung zugeschnitten.

Dadurch, dass auf jeweils einzeln vorzusehende und anzusteuernde Antriebe der Patrizenbacken verzichtet werden kann, und dies vielmehr durch Führungsschienen im Karussell gewährleistet wird, wird für jede Patrizenbacke mit gleicher Kraft und mit gleichartiger unterbrochener langsamer Bewegung gearbeitet. Weiter ist durch die Kreisbewegung, die in die Vertikalbewegung jeweils einer der Backen umgesetzt wird, eine Arbeits-Geschwindigkeit der Vorrichtung stufenlos variierbar, und so an den Zuführtakt der frisch gebackenen Waffeln leicht anpassbar.

Sollte die Zufuhr von Waffeln ausbleiben, kann die Vorrichtung ohne Schaden zu nehmen auch ohne eingebrachte Waffelstücke betrieben werden, was bei Vorrichtungen des Standes der Technik, bei denen mit Stanzlingen gearbeitet wurde, zu unnötig großem Verschleiß der Schneiden führen würde.

Hervorzuheben ist, dass das erfindungsgemäße Verfahren zum Zuschneiden von gebackenen Waffeln mit den Schritten 1.) Fassen einer Waffel mit Patrizenbacken 24, 26, 2.) Bewegen der Patrizenbacken 24, 26 und der zwischen ihnen gehaltenen Waffel durch eine Matrizenöffnung, und 3.) Öffnen der Patrizenbacken 24; 26 zur Freigabe der zugeschnittenen Waffel, in großen Variationsbreiten der Konsistenz der zugeführten Waffeln ohne Bröckelbruch arbeitet, da sozusagen ein geschütztes Schneiden stattfindet, bei dem die Schneidkante der Waffel beidseitig fest geschützt ist.

Weiter wird gewährleistet, daß die heiße Waffel vor dem Schneidevorgang zur Abkühlung zwischen den Patrizenbacken gehalten wird, also keine noch leicht verformbaren Waffeln aus der Vorrichtung abgegeben werden.

Das Verfahren kann zur variierenden Einhaltung jeweils neuer Abkühlzeiten und/oder zur Verbesserung des Taktzyklus zwischen den Schritten Fassen und Freigabe der Waffel mit einer jeweils anderen Vielzahl von Patrizenbacken-Paaren, abnehmbar montiert auf einer Karussellanordnung mit getrennten Roh-Waffelzuführ- und Waffelzuschnittabgabe-Stationen vorgesehen werden.

Die Vorrichtung kann auch ohne längere Zeit stillzustehen, schnell auf andere Schnittdimensionen umgerüstet werden, da ein ganzes Karussellrad mit der vorgegebenen Vielzahl von mit beweglichen patrizenförmigen Backen versehene Einrichtungen die in der Bewegungsbahn der Patrizenbacken 24, 26 ein Matrizenblech 22 aufweisen, ausgetauscht werden kann. Selbstverständlich kann auch jedes Paar einzeln vom Karussellrad gelöst werden. Dazu dienen drei Bohrungen in einem Bolzen-Sitz, an dem auch eine Welle 32 gelagert ist, an der beide Schenkel der zwei Patrizenbacken 24, 26 gelagert sind.

Vorteilhaft bei der Konstruktion des Karussellrads ist, daß die einzelnen Backenpaare nicht mit Antrieben versehen sind, sondern an dem Ende wenigstens eines der Schenkel jeweils ein Laufrad 16; 30 mit einer Drehachse im wesentlichem axial und parallel zum Schenkelverlauf zum Ablauf auf einer Schenkelbewegungvermittelnden Schiene 12; 18 vorgesehen ist.

Schließlich ist ein Merkmal, das den gemeinsamen Antrieb des Karussellrades und vieler Backenpaare gleichzeitig zuläßt, dass das Matrizenblech 22 stumpfwinklig in sich und mit geringem Betrag zur Ebene der Patrizenbacken angekantet ist. Das heißt, das bevorzugt von einer Mittelkante, die durch den Mittenbereich der Ausnehmung 28 im Matrizenblech 22 unterbrochen wird, zwei Abschnitte des Matrizenblechs gegenüber der Ebene der Patrizenbacken um einen Winkel von 5° - 20° abgewinkelt vorgesehen sind.

## Patentansprüche

1. Verfahren zum Zuschneiden von gebackenen Waffeln mit den Schritten :
- Fassen einer Waffel mit Patrizenbacken (24, 26),
- Bewegen der Patrizenbacken (24, 26) und der zwischen ihnen gehaltenen Waffel durch eine Matrizenöffnung, und
- Öffnen der Patrizenbacken (24; 26) zur Freigabe der zugeschnittenen Waffel.

2. Verfahren nach Anspruch 1, **dadurch gekennzeichnet, daß** die heiße Waffel vor dem Schneidevorgang zur Abkühlung zwischen den Patrizenbacken gehalten wird.

3. Verfahren nach einem der vorangehenden Ansprüche, **dadurch gekennzeichnet, daß** zur Einhaltung einer Abkühlzeit und zur Verbesserung des Taktzyklus mit den Schritten Fassen und Freigabe der Waffel eine Vielzahl von Patrizenbacken-Paaren, abnehmbar montiert auf einer Karussellanordnung mit getrennten Roh-Waffelzuführ- und Waffelzuschnittabgabe-Stationen vorgesehen werden.

4. Vorrichtung zur Durchführung des Verfahrens nach einem der vorangegangenen Anspruche, **gekennzeichnet durch** mit beweglichen patrizenförmigen Backen versehene Einrichtungen die in der Bewegungsbahn der Patrizenbacken (24, 26) ein Matrizenblech (22) aufweisen.

5. Vorrichtung nach Anspruch 4, **gekennzeichnet durch** eine Welle (32), an der beide Schenkel der zwei Patrizenbacken (24, 26) gelagert sind.

6. Vorrichtung nach Anspruch 4 oder 5, **gekennzeichnet durch** ein an dem Ende wenigstens eines der Schenkel vorgesehenes Laufrad (16; 30) mit einer Drehachse im wesentlichem axial zum Schenkelverlauf zum Ablauf auf einer Schenkelbewegungvermittelnden Schiene (12; 18).

7. Vorrichtung nach einem der Ansprüche 4 bis 6, **dadurch gekennzeichnet, daß** das Matrizenblech (22) stumpfwinklig in sich und mit geringem Betrag zur Ebene der Patrizenbacken angekantet ist.

8. Vorrichtung nach Anspruch 7, **dadurch gekennzeichnet, daß** von einer Mittelkante, die durch den Mittenbereich der Ausnehmung (28) im Matrizenblech (22) unterbrochen wird, zwei Abschnitte des Matrizenblechs gegenüber der Ebene der Patrizenbacken um einen Winkel von 5° - 20° abgewinkelt vorgesehen sind.
